(19) Europäisches Patentamt

European Patent Office

Office européen des brevets

(11) **EP 2 181 277 B1**

(12) **EUROPÄISCHE PATENTSCHRIFT**

(45) Veröffentlichungstag und Bekanntmachung des Hinweises auf die Patenterteilung:
**13.07.2011 Patentblatt 2011/28**

(21) Anmeldenummer: **09777319.6**

(22) Anmeldetag: **21.07.2009**

(51) Int Cl.:
*F16H 55/08* *(2006.01)*

(86) Internationale Anmeldenummer:
**PCT/EP2009/005270**

(87) Internationale Veröffentlichungsnummer:
**WO 2010/025791 (11.03.2010 Gazette 2010/10)**

(54) **VERZAHNUNG EINES ZAHNRADS**

TOOTHING OF A GEAR

DENTURE D'UNE ROUE DENTÉE

(84) Benannte Vertragsstaaten:
**AT BE BG CH CY CZ DE DK EE ES FI FR GB GR
HR HU IE IS IT LI LT LU LV MC MK MT NL NO PL
PT RO SE SI SK SM TR**

(30) Priorität: **02.09.2008 DE 102008045318**

(43) Veröffentlichungstag der Anmeldung:
**05.05.2010 Patentblatt 2010/18**

(73) Patentinhaber: **Voith Patent GmbH
89522 Heidenheim (DE)**

(72) Erfinder:
• **ETZOLD, Mathias
04849 Kossa OT Pressel (DE)**
• **ROTH, Zsolt
89518 Heidenheim (DE)**

(74) Vertreter: **Dr. Weitzel & Partner
Patentanwälte
Friedenstrasse 10
89522 Heidenheim (DE)**

(56) Entgegenhaltungen:
WO-A-2006/038901 DE-B3-102006 015 521
US-B1- 6 342 023

**Beschreibung**

Die Erfindung betrifft die Verzahnung eines Zahnrads mit einer Mehrzahl von Zähnen, nach der im Oberbegriff von Anspruch 1 näher definierten Art, und wie es im Document DE 102006015521 gezeigt ist.

Aus der gattungsbildenden DE 102006015521 B3 ist eine Verzahnung eines evolventisch wälzverzahnten Zahnrades bekannt. Der Kern der genannten Schrift beschäftigt sich dabei insbesondere mit dem sogenannten Zahnfußbereich, also dem Bereich, der die einzelnen Zähne des evolventisch wälzverzahnten Zahnrades miteinander verbindet. In der genannten Schrift wird mit dem Ziel in beide Laufrichtungen gleichermaßen lauffähige Verzahnungen bereitzustellen ein Zahnfußbereich vorgeschlagen, welcher gegenüber der üblichen wälzgefrästen Ausrundung in Form einer Ellipse ausgerundet wird. Solche Zahnräder weisen durch die elliptische Ausrundung des Zahnfußbereichs eine höhere Tragfähigkeit auf, als Zahnräder mit radialer Ausrundung.

Ausgehend von diesem vorbekannten Stand der Technik ist es die Aufgabe der vorliegenden Erfindung, eine Verzahnung für ein wälzverzahntes Zahnrad bereitzustellen, welche eine weitere Steigerung der Festigkeit im Zahnfußbereich ermöglicht, so dass das Zahnrad bei gleicher Festigkeit kleiner oder bei vergleichbarer Baugröße mit einer deutlichen Steigerung der Festigkeit ausgeführt werden kann.

Diese Aufgabe wird erfindungsgemäß durch die im kennzeichnenden Teil von Anspruch 1 genannten Merkmale gelöst.

Den Erfindern hat sich in überraschender Weise gezeigt, dass eine Gestaltung des Zahnfußbereichs mit einer Tangensfunktion, welche tangentenstetig aus der darüber liegenden Zahnflankenform des Nutzbereichs hervorgeht, und welche ihrerseits tangentenstetig in eine Kreisbahn übergeht, die wiederum am Fußkreis des Zahnrades tangential anliegt, eine deutliche Steigerung der Zahnfußfestigkeit erlaubt.

Die von den Erfindern durchgeführten Untersuchungen haben dabei ergeben, dass rechnerische Festigkeitssteigerungen des Zahnfußes von bis zu 30 %, gegenüber einem herkömmlichen wälzgefrästen Zahnrad, durch dieses Einfügen einer Tangensfunktion zwischen der Kreisbahn und der Zahnflankenform im Nutzbereich möglich werden.

Aufgrund der Symmetrie der Zahnflanke zweier benachbarter Zähne zueinander reicht es aus, eine der Zahnflankenformen zu ermitteln und diese dann durch eine Spiegelung an der Symmetrieachse auf den gegenüberliegenden Bereich zu übertragen. Dadurch, dass die Kreisbahn im Fußpunkt tangential an dem Fußkreis anliegt und die Symmetrieachse durch diesen Fußpunkt verläuft, kann so mit einer einfachen Kombination einer Tangensfunktion mit der Kreisbahn bis zum Fußpunkt und dann einer Spiegelung dieser beiden Funktionen der gesamte Zahnfußbereich festigkeitssteigernd gestaltet werden.

Diese Funktionalitäten lassen sich dabei am Normalschnitt in der genannten Art jeweils einfach und effizient ermitteln, da sich die Übergänge der Funktionen ineinander mathematisch darstellen lassen, so dass lediglich ein Winkel und der Radius der Kreisbahn durch die konstruktiven Gegebenheiten zu wählen sind. Die so entstehende Form des Zahnfußbereichs beziehungsweise der Zahnlücke des Zahnrades kann dann auf den Normalschnitt verschiedener Zähne in Zahnrädern übertragen werden. So sind beispielsweise gerade, schräg oder bogenförmig verlaufende Stirnverzahnungen für die erfindungsgemäße Gestaltung des Zahnfußbereichs und die damit verbundene Steigerung der Festigkeit ebenso geeignet, wie die Verzahnungen von zum Beispiel Kegelrädern oder andersartigen Zahnrädern.

Grundsätzlich ist die erfindungsgemäße Ausgestaltung des Zahnfußes natürlich auch für Zahnstangen, Kegelräder, Beveloidräder, Kronenräder, Schraubenräder oder Schneckenräder denkbar, wobei die Zahnfußform dann im jeweiligen Normalschnitt zu bestimmen ist und sich beispielsweise bei ein- und mehrgängigen Schneckenrädern dann über die Länge des als Ganzes abgewickelten Zahns selbstverständlich aufgrund der sich typischerweise ändernden Geometrie des Zahns selbst, also beispielsweise der Zahnhöhe und der Zahnbreite, entsprechend verändern.

Eine erfindungsgemäße Verzahnung ist also gryndsätzlich bei verschiedenen Zahnrädern und bei mit Zähnen versehenen Elementen zu realisieren. Dabei ist die Kombination auch mit beliebigen Zahnflankenformen im Nutzbereich denkbar.

Besonders bevorzugt ist jedoch die Verwendung mit einer im Nutzbereich als Rollkurve (Evolvente oder Oktoide) ausgestaltete Zahnflankenform, insbesondere einer evolventischen Zahnflankenform. Dieser gängige im Maschinenbau allgemein übliche Typ einer Verzahnung eignet sich für die erfindungsgemäße Ausgestaltung des Zahnfußbereichs besonders gut. Die größten Festigkeitssteigerungen durch die neuartige Gestaltung des Zahnfußbereiches wurden bei derartigen evolventisch verzahnten Zahnrädern ermittelt.

Im Nachfolgenden wird anhand der Figuren in einem Ausführungsbeispiel das Aussehen und die Funktionalität der neuen Zahnfußform am Beispiel eines evolventisch verzahnten Zahnrades an einem Zahn beziehungsweise einer Zahnlücke im Normalschnitt beschrieben. Grundsätzlich kann diese Ausgestaltung des Zahnfußbereichs, wie bereits ausführlich dargelegt, jedoch auch auf verschiedene Arten von Zahnrädern und Verzahnungen angewandt werden.

Es zeigen:

Figur 1    der Blick im Normalschnitt auf ein evolventisch verzahntes Zahnrad mit einer Stirnverzahnung;

Figur 2    die Ausgestaltung des Zahnfußbereiches in einem Zahnrad gemäß Figur 1 analog der Erfindung; und

Figur 3    eine detaillierte Darstellung der mathematischen Größen zur Ermittlung der notwendigen Funktionen für die erfindungsgemäße Ausgestaltung des Zahnfußbereiches.

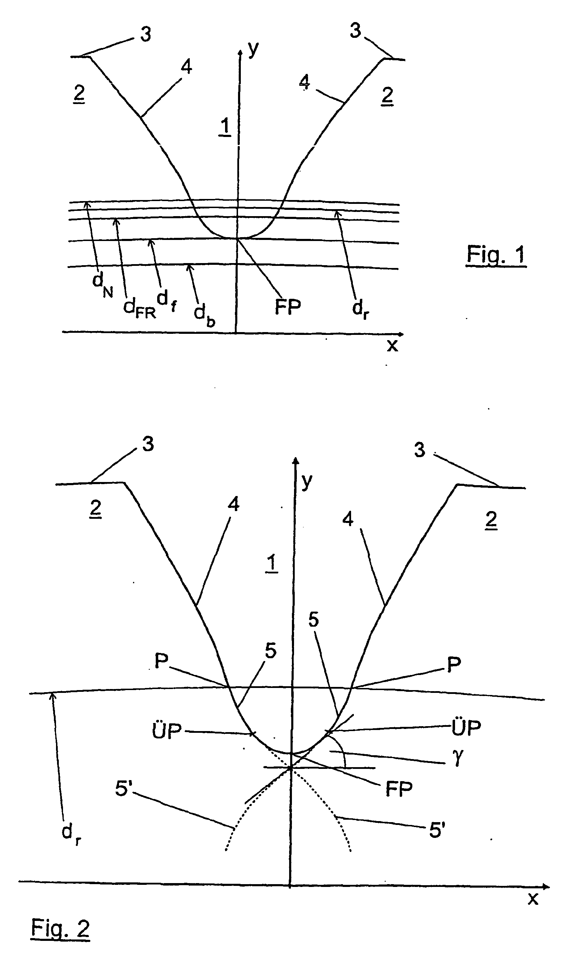

In Figur 1 ist eine Zahnlücke 1 in einem Normalschnitt dargestellt. Als Bezugsgrößen sind dabei die koordinaten x, y vermerkt, wobei die y-Achse gleichzeitig die Symmetrieachse der Zahnlücke 1 ist. Die angedeuteten Abschnitte der beiden Zähne 2 sind dabei in ihrem Kopfbereich 3 durch einen hier nicht dargestellten Kopfkreis beschränkt. Die hier beispielhaft gewählte Zahnflankenform 4 ist eine evolventische Zahnflankenform, welche bis zu einem Durchmesser $d_N$ des sogenannten Nutzkreises von der hier nicht dargestellten Zahnflanke des Zahnes eines mit diesem Zahnrad kämmenden Gegenzahnrades beziehungsweise Zahnelementes genutzt wird. Dieser Abschnitt zwischen dem Kopfkreis im Bereich der Köpfe 3 der Zähne 2 und dem Nutzkreis $d_N$ wird nachfolgend als Nutzbereich bezeichnet. Außerdem ist noch auf den tiefsten Durchmesser hinzuweisen, bis zu dem eine Zahn eines mit diesem Zahnrad kämmenden Gegenzahnrades beziehungsweise Zahnelementes in die Zahnlücke eintaucht. Dieser Durchmesser wird typischerweise als Freikreisdurchmesser $d_{FR}$ bezeichnet.

Der sich daran in Richtung der Zahnradmitte anschließende Bereich zwischen dem Nutzkreis $d_N$ und dem tiefsten Punkt der Zahnlücke 1, in welcher der sogenannte Fußkreis $d_f$ liegt, wird nachfolgend als Fußbereich der Zahnlücke 1 bezeichnet. Der Schnittpunkt der Symmetrieachse y mit dem Fußkreis $d_f$ ist dabei der Fußpunkt FP der Zahnlücke 1.

Die bis hierher bezeichneten Größen sind bei allen Zahnrädern gängige und übliche Größen, auf welche sich die nachfolgende detaillierte Beschreibung der erfindungsgemäßen Ausgestaltung des Zahnfußbereichs, welcher hier bereits in der erfindungsgemäßen Art und Weise dargestellt ist, stützen wird.

Zusätzlich sind bei dem hier dargestellten Beispiel der evolventischen Zahnflankenform 4 weitere Größen von Bedeutung. So ist in Figur 1 der sogenannte Grundkreis $d_b$ eingezeichnet, welcher für die Konstruktion der Flankenform 4 der evolventischen Verzahnung relevant ist. Außerdem soil noch kurz der bei Verzahnungen allgemein gebräuchliche Modul m erwähnt werden, welcher sich aus dem hier nicht dargestellten Teilkreisdurchmesser geteilt durch die Zähnezahl beziehungsweise die Teilung p geteilt durch die Kreiszahl $\pi$ ergibt.

Außerdem ist in Figur 1 der Durchmesser beziehungsweise Radius zu erkennen, welcher für die Erfindung relevant ist und als relevanter Durchmesser $d_r$ bezeichnet werden soll. Dieser relevante Durchmesser $d_r$ beschreibt in dem hier dargestellten Ausführungsbeispiel den Übergang der Zahnflankenform 4 im Nutzbereich in die erfindungsgemäße Zahnflankenform im Fußbereich. Dieser Übergang ist bei herkömmlichen Verzahnungen auch als Formkreis bekannt. Der relevante Durchmesser kann theoretisch gleich dem Durchmesser des Nutzkreises $d_N$ sein. Im Allgemeinen wird er jedoch etwas kleiner gewählt sein, um eine hinsichtlich der Fertigungstoleranz und der Lagerungstoleranz der Zahnräder sinnvolle Sicherheit zu gewährleisten. In dem hier dargestellten Ausführungsbeispiel ist der relevante Durchmesser $d_r$ aus dem arithmetischen Mittel zwischen dem Nutzkreisdurchmesser $d_N$ und dem Freikreisdurchmesser $d_{FR}$ gewählt, so dass ein gewisser Sicherheitsabstand zwischen dem relevanten Durchmesser $d_r$ und dem Nutzkreisdurchmesser $d_N$ entsteht. Damit ist sichergestellt, dass ein hier nicht dargestellter Zahn eines mit dem Zahnrad kämmenden Gegenzahnelements in jedem Fall auf der berechneten Form der Zahnflanke 4, hier also der Evolvente, abläuft und nicht auf der erfindungsgemäß ausgestalteten Form der Flanke im Zahnfußbereich tragend zum Eingriff kommt.

In Figur 2 ist nun die Form des Zahnfußes in der erfindungsgemäßen Ausgestaltung näher erläutert. Dabei sind die bereits in Figur 1 genannten Elemente auch in Figur 2 mit denselben Bezugszeichen versehen. Von den in Figur 1 erläuterten Durchmessern ist in Figur 2 nur noch der relevante Durchmesser $d_r$ eingezeichnet. Wie bereits erwähnt, geht die Zahnflankenform 4 des Nutzbereichs im vorliegenden Ausführungsbeispiel aus sicherheits- und toleranzbedingten Gründen im Bereich des relevanten Durchmessers $d_r$ in die erfindungsgemäße Ausgestaltung der Zahnfußform im Zahnfußbereich tangentenstetig über. An dem Punkt P, an dem der Durchmesser $d_r$ die Zahnflanke 4 schneidet, erfolgt dieser Übergang von der evolventischen Zahnflankenform 4 in eine Tangensfunktion in dem mit 5 bezeichneten Bereich der Zahnflankenform. In Figur 2 ist der im Bereich 5 der Zahnflankenform verlaufende Tangens in Richtung des Zahnradmittelpunkts, also des Ursprungs der Koordinaten verlängert. Dieser Abschnitt der Tangensfunktion 5' schneidet dabei die y-Achse in einem Bereich unterhalb des Fußpunkts FP. In diesem Schnittpunkt mit der y-Achse, also bei der mathematischen Bedingung x = 0, weist der Tangens im Schnitt mit der Symmetrieachse y einen entsprechenden Steigungswinkel auf. Der Steigungswinkel im Verhältnis zur x-Achse ist in Figur 2 dabei als Winkel $\gamma$ bezeichnet. Gegenüber der Symmetrieachse y selbst ergibt sich somit ein Winkel von 90°- y. Dieser Winkel $\gamma$ wird dabei für die später noch erläuterte Konstruktion beziehungsweise die Auswahl der konkreten Tangensfunktion von Bedeutung sein.

Außerdem ist zu erkennen, dass die Tangensfunktion in einem Übergangspunkt ÜP in eine Kreisbahn 6 übergeht. Auch dieser Übergang ist tangentenstetig zwischen der Kreisbahn 6 und dem genutzten Bereich des Tangens 5 ausgebildet. Die Kreisbahn 6 liegt dann tangential am Fußkreis $d_f$ im Fußpunkt FP, also dem Schnittpunkt des Fußkreises $d_f$ mit der Symmetrieachse y an.

EP 2 181 277 B1

Die mathematische Funktion des Tangens bezogen auf den Koordinatenmittelpunkt im Zentrum des Zahnrades und eine jeweils symmetrisch zur jeweiligen Zahnlücke 1 verlaufenden Symmetrieachse y beschreibt sich anhand der nachfolgenden Gleichung:

$$y(x) = a \cdot \tan(b \cdot x) + c \qquad\qquad \text{(Gl. 1)}$$

Um diese Funktion eindeutig zu bestimmen sind drei Randbedingungen nötig, die folgendermaßen festgelegt werden:

(1) Der Übergang von Evolvente zur Tangensfunktion ist tangentenstetig.

(2) Der Steigungswinkel der Tangensfunktion am Schnittpunkt mit der Symmetrieachse y (also bei x = 0) wird durch den Winkel $\gamma$ festgelegt, Dieser Winkel kann in gewissen konstruktiven Grenzen später frel gewählt werden, worauf im Nachfolgenden noch näher eingegangen wird.

(3) Der Übergangspunkt von der Evolvente zur Tangensfunktion befindet sich auf dem relevanten Durchmesser $d_r$, der im Kern beliebig gewählt werden kann, jedoch in jedem Fall kleiner oder maximal gleich ein Nutzkreisdurchmesser $d_N$ sein muss, wie oben bereits beschrieben wurde.

Die sich an diesen Tangens anschließende Kreisbahn 6 ergibt sich in allgemeiner Form nach der folgenden Gleichung:

$$r^2 = (x - e)^2 + (y - f)^2 \qquad\qquad \text{(Gl. 2)}$$

Der Radius r kann dabei beliebig gewählt werden. Der Mittelpunkt soll dabei auf der Symmetrieachse y, also der Ordinate des Koordinatensystems liegen. Demzufolge ergibt sich der Wert e mit e = 0. Außerdem benötigt man für die Kreisgleichung noch die weitere Randbedingung:

(4) Der Übergang im Übergangspunkt ÜP zur Tangensfunktion ist tangentenstetig

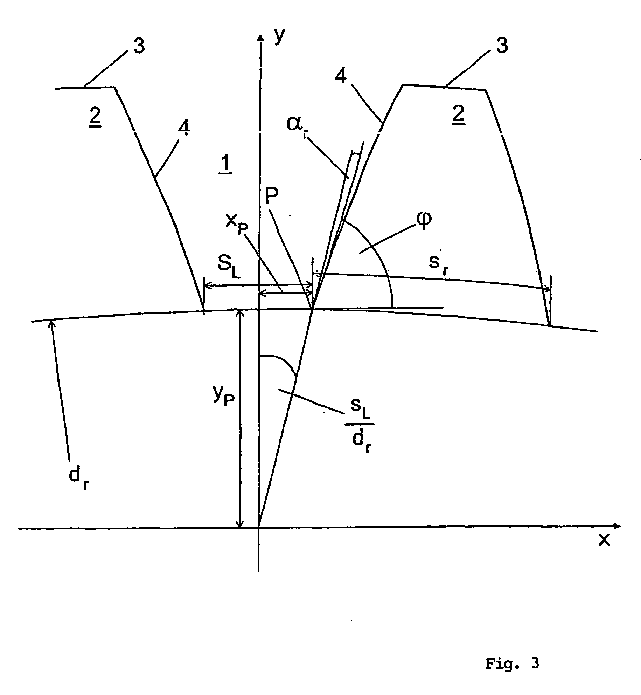

Die Zahnflankenform im Fußbereich wird nachfolgend mathematisch allgemein dargelegt, wobei die relevanten Größen, soweit sie von den bisherigen Figuren noch nicht erläutert wurden, sich aus Figur 3 ergeben. Zuerst erfolgt die Bestimmung der Koordinaten des Anschlusspunktes P der Evolvente.

Dieser Punkt liegt auf dem Durchmesser $d_r$. Um die Zahnlückenbreite $S_L$ (Sehne) zu bestimmen, wird die Zahndicke $s_r$ im Bogenmaß benötigt, welche folgendermaßen bestimmt wird (mit s = Zahndicke am Teilkreis; d = Teilkreisdurchmesser):

$$s_r = d_r \left( \frac{s}{d} + \text{inv}\,\alpha - \text{inv}\,\alpha_r \right) \qquad\qquad \text{(Gl. 3)}$$

$\alpha_r$ ist der Eingriffswinkel auf dem Durchmesser $d_r$. Der Eingriffswinkel $\alpha_r$ ist dabei über die Wahl der Evolvente implizit mit vorgegeben. Es hat sich gezeigt, dass die erfindungsgemäße Steigerung der Festigkeit ab einem der Eingriffswinkel $\alpha_r$ von 4° bis 5° auftritt. Der Eingriffswinkel $\alpha_r$ sollte damit in jedem Fall größer als 4°, bevorzugt größer als 7° gewählt werden. Dagegen bezeichnet $\alpha$ den Eingriffwinkel auf dem Teilkreis, welcher bei den meisten Zahnrädern typischerweise bei 15-25° bevorzugt bei 20° liegt.

Die Zahnlückenbreite $s_L$ im Bogenmaß ergibt sich dann zu:

4

$$s_L = \pi \cdot \frac{d_r}{z} - s_r \qquad \text{(Gl. 4)}$$

Daraus kann die Strecke der Zahnlückenbreite (Sehne) berechnet werden:

$$S_L = d_r \cdot \sin\frac{s_L}{d_r} \qquad \text{(Gl. 5)}$$

Die x-Koordinate des Punktes P lautet also:

$$x_P = \frac{1}{2}S_L \qquad \text{(Gl. 6)}$$

Die y-Koordinate ergibt sich nach Pythagoras zu:

$$y_P = \sqrt{\left(\frac{d_r}{2}\right)^2 - \left(\frac{S_L}{2}\right)^2} \qquad \text{(Gl. 7)}$$

Um am Punkt P Tangentenstetigkeit zu gewährleisten, ist die Kenntnis des Anstiegwinkels φ der Evolvente im Punkt P notwendig. Dieser Winkel setzt sich zusammen aus dem Eingriffswinkel $\alpha_r$ und dem halben Öffnungswinkel der Zahnlücke:

$$\hat{\varphi} = \frac{\pi}{2} - \left(\hat{\alpha}_r + \frac{s_L}{d_r}\right) \qquad \text{(Gl. 8)}$$

Nun können mit den Randbedingungen die Koeffizienten a und b sowie der Summand c bestimmt werden. Aus Randbedingung (1) folgt:

$$y'\left(x = \frac{S_L}{2}\right) = \tan\varphi \qquad \text{(Gl. 9)}$$

Aus Randbedingung (2) folgt:

$$y'(x = 0) = \tan\gamma \qquad \text{(Gl. 10)}$$

Aus Randbedingung (3) folgt:

$$y\left(x = \frac{S_L}{2}\right) = \sqrt{\left(\frac{d_r}{2}\right)^2 - \left(\frac{S_L}{2}\right)^2} \qquad \text{(Gl. 11)}$$

Damit ergibt sich für a, b und c:

$$a = \frac{S_L}{2} \cdot \frac{\tan\gamma}{\arccos\sqrt{\dfrac{\tan\gamma}{\tan\varphi}}} \qquad \text{(Gl. 12)}$$

$$b = \frac{2}{S_L} \cdot \arccos\sqrt{\frac{\tan\gamma}{\tan\varphi}} \qquad \text{(Gl. 13)}$$

$$c = \sqrt{\left(\frac{d_r}{2}\right)^2 - \left(\frac{S_L}{2}\right)^2} - a \cdot \tan\left(b \cdot \frac{S_L}{2}\right) \qquad \text{(Gl. 14)}$$

Der Winkel $\gamma$ kann entsprechend gewählt werden. Um eine Verbesserung gegenüber herkömmlichen Verzahnungen zu erzielen sollte er in jedem Fall kleiner als 65° gewählt werden. In erster Näherung liegt der optimale Wert jedoch bei oder unter 45°. Als besonders bevorzugt hat es sich erwiesen den Winkel nach dem nachfolgenden Zusammenhang der Gleichung Gl. 15 zu wählen, wobei in einem Toleranzbereich von +/- 20% um diese $\gamma$-Wert gute Ergebnisse zu erzielen sind.

$$\gamma = 45° - \frac{180°}{z} - \alpha_r \qquad \text{(Gl. 15)}$$

Die allgemeine Kreisgleichung muss zunächst in die Form g(x) gebracht werden.

$$g(x) = \pm\sqrt{r^2 - (x - e)^2} + f \qquad \text{(Gl.16)}$$

Da der Mittelpunkt des Kreises auf der y-Achse liegt kann e = 0 gesetzt werden. Es wird der untere Kreisbogen benötigt, somit muss das Vorzeichen der Wurzel negativ sein. Es folgt:

$$g(x) = -\sqrt{r^2 - x^2} + f \qquad \text{(Gl.17)}$$

Nun kann die Bestimmung von d erfolgen. Aus der Randbedingung (4) ergibt sich folgender Zusammenhang.

Die Ableitungen der Tangensfunktion und der Kreisfunktion müssen an der Übergangsstelle im Übergangspunkt ÜP bei $x_ü$ gleich groß sein.

$$g'(x_ü) = y'(x_ü) \qquad \text{(Gl.18)}$$

Hieraus folgt eine Gleichung, mit der die Übergangsstelle $x_ü$ numerisch bestimmt werden kann:

$$0 = \frac{\cos^4(b \cdot x_ü)}{(a \cdot b)^2} - \frac{r^2}{x_ü^2} + 1 \qquad \text{(Gl.19)}$$

Mit $x_ü$ kann jetzt der Summand f bestimmt werden. Dazu werden die beiden Funktionen an der Stelle $x_ü$ gleichgesetzt.

$$a \cdot \tan(b \cdot x_ü) + c = -\sqrt{r^2 - x_ü^2} + f \qquad \text{(Gl. 20)}$$

Für f ergibt sich schlussendlich:

$$f = a \cdot \tan(b \cdot x_ü) + c + \sqrt{r^2 - x_ü^2} \qquad \text{(Gl. 21)}$$

Die Geometrie der Zahnlücke kann im Zahnfußbereich also allgemein ausgedrückt werden:

| x-Bereich | Funktion |
|---|---|
| $-\dfrac{S_L}{2} \leq x \leq -x_ü$ | $y(x) = a \cdot \tan(-b \cdot x) + c$ |
| $-x_ü < x < x_ü$ | $g(x) = -\sqrt{r^2 - x^2} + f$ |
| $x_ü \leq x \leq \dfrac{S_L}{2}$ | $y(x) = a \cdot \tan(b \cdot x) + c$ |

mit:

a    nach Gleichung (Gl. 12)
b    nach Gleichung (Gl. 13)
c    nach Gleichung (Gl. 14)
d    nach Gleichung (Gl. 21)
$x_ü$    nach Gleichung (Gl. 19)

Die Funktion für die negativen Argumente wird hierbei einfach durch eine Spiegelung an der Ordinate gewonnen, da diese Ordinate gleichzeitig die Symmetrieachse Y der Zahnlücke 1 ist.

Wie sich aus dem vorgehend im Detail erläuterten mathematischen Zusammenhang ergibt, bleibt nun lediglich

der Winkel $\gamma$ sowie der Radius r der Kreisbahn 6 durch den Konstrukteur einer derartigen Zahnfußform zu wählen. Für die ideale Wahl des Winkels $\gamma$ findet sich oben mit der Gleichung (Gl. 15) bereits eine entsprechende Empfehlung.

Für den Radius r der Kreisbahn 6 haben sich dabei Werte, welche im Bereich des 0,1 - 0,6-fachen des Moduls m liegen als geeignet gezeigt. Bevorzugt liegen diese Werte im Bereich von 0,3 - 0,4-fachen des Moduls m. Eine weitere Verbesserung lässt sich erreichen, wenn man sich auf die Strecke der Zahnlückenbreite $S_L$ als Sehne bezieht. Für den Radius r haben sich dabei Werte im Bereich des 0,1 - 0,6-fachen der Zahnlückenbreite $S_L$ als geeignet gezeigt. Bevorzugt liegen diese Werte im Bereich vom 0,3 - 0,4-fachen der Zahnlückenbreite $S_L$. Im nachfolgenden Beispiel wurde dabei auf Basis eines Radiuses von $r = 0,3 \cdot S_L$ gerechnet, dieser Wert ist als besonders bevorzugter Wert nach Möglichkeit zu wählen.

Auf Basis dieser Werte ergaben FEM-Berechnungen eine Steigerung der Zahnfußfestigkeit von bis zu 30 % gegenüber herkömmlichen Zahnfußformen.

Ein Beispiel anhand von Werten, welche exemplarisch aus den genannten Wertebereichen gewählt wurden, sind nachfolgend erläutert. Die gewählten Bezeichnungen und Formelzeichen sind dabei die, die bei Zahnrädern allgemein üblich und anerkannt sind.

Ein Zahnrad I hat folgende Kenngrößen:

| Modul | $m$ | = | 4mm |
|---|---|---|---|
| Zähnezahl | $Z_1$ | = | 53 |
| Profilverschiebung | $X_1$ | = | 0 |
| Eingriffswinkel auf dem Teilkreis | $\alpha$ | = | 20° |

Um den Nutzkreisdurchmesser $d_N$ und den Freikreisdurchmesser $d_{FR}$ des Zahnrades I zu bestimmen sind die Kenngrößen eines zweiten mit Zahnrad I kämmenden Zahnrades II und der Achsabstand zwischen den Zahnrädern I, II nötig.

| Zähnezahl | $z_2$ | = | 19 |
|---|---|---|---|
| Profilverschiebung | $x_2$ | = | 0,6 |
| Achsabstand | $a$ | = | 146,4mm |

Zum Vergleich wird eine wälzgefräste Zahnradvariante herangezogen. Die Fußform wird mit einem Wälzfräser mit folgenden Kennwerten erzeugt:

| Kopfhöhenfaktor | $h_{aP0}{}^* = 1,3889$ |
|---|---|
| Kopfabrundungsfaktor | $\rho_{aP0}{}^* = 0,25$ |
| (wie üblich und durch den * angedeutet jeweils bezogen auf den Modul m) | |
| Protuberanzwinkel | $\alpha_{pm0} = 10°$ |
| Protuberanzbetrag | $\rho_{m0} = 0,26mm$ |

Die Bearbeitungszugabe vor dem Schleifen wird mit q = 0,16mm gewählt, dementsprechend ergibt sich ein Restprotuberanzbetrag von 0,1mm.

Für diese Verzahnung ergeben sich folgende Eingangsgrößen zur Berechnung der Fußkurve:

| Nutzkreisdurchmesser | $d_{N1} = 207,764mm$ |
|---|---|
| Freikreisdurchmesser | $d_{FR} = 204,000mm$ |
| Durchmesser des Übergangs Evolvente-Tangensfunktion (arithmetisches Mittel aus $d_{N1}$ und $d_{FR}$): | $d_r = 205,88mm$ |
| Zahnlückenbreite (Sehne) auf $d_r$: | $S_L = 4,204mm$ |
| Eingriffswinkel $\alpha_r$ auf dem relevanten Druhmesser | $d_r$:$\alpha_r$ **= 14,6°** |
| Anstiegswinkel der Evolvente im Punkt des Übergangs Evolvente-Tangensfunktion: | $\varphi = 74,2°$ |

Um die Fußkurve eindeutig zu bestimmen fehlen noch die Angaben für den Anstiegswinkel der Tangensfunktion an der Stelle x = 0 ($\gamma$) und der Radius r. Für den Winkel $\gamma$ kann gemäß Gleichung (GL. 15) folgender Zusammenhang angenommen werden:

$$\gamma = 45° - \frac{180°}{z_1} - \alpha_r$$

Der Ausrundungsradius r der Kreisbahn 6 ist ideal, wenn - wie oben dargelegt - der folgender Zusammenhang gilt:

$$r = 0,35 \cdot S_L$$

Für das Beispiel ergeben sich somit:

| γ | = | 27˚ |
|---|---|---|
| r | = | 1,5 mm |

Die Koeffizienten und Summanden der Tangens und der Kreisfunktion ergeben sich hier zu:

| Faktor | a = 0,30626; |
|---|---|
| Faktor | b = 0,63469976 |
| Summand | c = 101,64979; und |
| Summand | f = 103,32733 |

Die Grenzen für γ liegen bei diesem Zahnrad bei folgenden Werten:

| $\gamma_{min}$ | = | 11˚ |
|---|---|---|
| $\gamma_{max}$ | = | 65˚ |

Wenn man diesen Bereich verlässt, stellt die neue Zahnfußform gegenüber der mit dem oben genannten Wälzfräser erzeugten Variante keine Spannungsminimierung und damit keine Steigerung der Zahnfußfestigkeit dar.
Die Untergrenze für den Radius liegt in diesem Beispiel bei $r_{min}$ = 0,5mm, die Obergrenze bei $r_{max}$ = 2,1 mm. Dies ist keine Spannungsmäßige Grenze, sondern eine Geometrische. Denn dieser Radius ist annähernd eine Vollausrundung, die aber noch geringere Spannungen aufweist als die wälzgefräste Vergleichsvariante, jedoch höhere als für optimale γ und r.
Gegenüber dem herkömmlich wälzgefrästen Zahnrad ist bei dem hier beispielhaft gerechneten Zahnrad I eine Steigerung der Zahnfußfestigkeit um bis zu 30 % möglich.
Die Herstellung solcher Zahnräder kann beispielsweise durch in mehreren Achsen frei beweglich und frei - programmierbare Fräseinrichtungen oder durch geeignete, von der erfindungsgemäßen Zahnfußform abgeleitete Abwälzfräser erfolgen.

**Patentansprüche**

1. Verzahnung eines Zahnrades mit einer Mehrzahl von Zähnen;

    1.1 deren Zahnflanken einen Nutzbereich und einen Zahnfußbereich aufweisen; wobei
    1.2 der Zahnfußbereich sich im Normalschnitt betrachtet von einem Fußkreis bis zu einem Nutzkreis erstreckt;
    1.3 die Zahnflanken von im Normalschnitt benachbarten Zähnen jeweils symmetrisch zueinander ausgebildet sind, wobei
    1.4 die Symmetrieachse (y) den Fußkreis im Fußpunkt schneidet; **dadurch gekennzeichnet, dass** - jeweils im Normalschnitt betrachtet -
    1.5 die Zahnflanken im Zahnfußbereich ab einem relevanten Durchmesser ($d_r$) in Richtung des Zahnradmittel-

punkts als Tangensfunktion ausgebildet sind;

1.6 die Tangensfunktion im relevanten Durchmesser ($d_r$) tangentenstetig in die Zahnflankenform des Nutzbereichs übergeht;

1.7 die Tangensfunktion im Zahnfußbereich tangentenstetig in eine Kreisbahn übergeht, welche an dem Fußkreis ($d_f$) im Fußpunkt (FP) tangential anliegt.

2. Verzahnung nach Anspruch 1, **dadurch gekennzeichnet, dass**

2.1 die über die Kreisbahn hinaus verlängerte Tangensfunktion die Symmetrieachse (y) in einem Steigungswinkel von 90˚- γ schneidet; wobei

2.2 γ kleiner als 65˚ gewählt ist.

3. Verzahnung nach Anspruch 1, **dadurch gekennzeichnet, dass**

3.1 die über die Kreisbahn hinaus verlängerte Tangensfunktion die Symmetrieachse (y) in einem Steigungswinkel von 90˚- γ schneidet; wobei

3.2 γ kleiner als 50˚ gewählt ist.

4. Verzahnung nach Anspruch 1, **dadurch gekennzeichnet, dass**

4.1 die über die Kreisbahn hinaus verlängerte Tangensfunktion die Symmetrieachse (y) in einem Steigungswinkel von 90˚- γ schneidet; wobei

4.2 γ kleiner als 45˚ gewählt ist.

5. Verzahnung nach einem der Ansprüche 2 bis 4, **dadurch gekennzeichnet, dass** γ in Abhängigkeit der Zähnezahl (z) und des Eingriffswinkels ($\alpha_r$) der Zahnflankenform auf dem relevanten Durchmesser ($d_r$) durch den Zusammenhang 45˚ - 180˚/z - $\alpha_r$ gewählt ist.

6. Verzahnung nach Anspruch 5, **dadurch gekennzeichnet, dass** der Eingriffswinkels ($\alpha_r$) der Zahnflankenform auf dem relevanten Durchmesser ($d_r$) größer als oder gleich 4˚, insbesondere größer als 7˚, gewählt ist.

7. Verzahnung nach einem der Ansprüche 1 bis 6, **dadurch gekennzeichnet, dass** der Radius der Kreisbahn mit dem 0,1 - 0,6-fachen des Moduls gewählt ist.

8. Verzahnung nach einem der Ansprüche 1 bis 6, **dadurch gekennzeichnet, dass** der Radius der Kreisbahn mit dem 0,3 - 0,4-fachen des Moduls gewählt ist.

9. Verzahnung nach einem der Ansprüche 1 bis 6, **dadurch gekennzeichnet, dass** der Radius der Kreisbahn mit dem 0,1 - 0,6-fachen der Zahnlückenbreite ($S_L$) auf dem relevanten Durchmesser ($d_r$) gewählt ist.

10. Verzahnung nach einem der Ansprüche bis 6, **dadurch gekennzeichnet, dass** der Radius der Kreisbahn mit dem 0,3 - 0,4-fachen der Zahnlückenbreite ($S_L$) auf dem relevanten Durchmesser ($d_r$) gewählt ist.

11. Verzahnung nach einem der vorhergehenden Ansprüche, **dadurch gekennzeichnet, dass** der relevante Durchmesser ($d_r$) kleiner oder maximal gleich dem Durchmesser des Nutzkreises ist.

12. Verzahnung nach einem der vorhergehenden Ansprüche, **dadurch gekennzeichnet, dass** der relevante Durchmesser ($d_r$) als arithmetischer Mittelwert zwischen dem Durchmesser des Nutzkreises und dem Durchmesser eines Freikreises gewählt ist.

13. Verzahnung nach einem der vörhergehenden Ansprüche, **dadurch gekennzeichnet, dass** die Zahnflankenform im Nutzbereich als Evolvente ausgebildet ist.

14. Verzahnung nach Anspruch 13, **dadurch gekennzeichnet, dass** der relevante Durchmesser ($d_r$) größer oder minimal gleich dem Durchmesser des Grundkreises gewählt ist.

**Claims**

1. A toothing of a gear wheel with a number of teeth;

   1.1 whose tooth flanks present a useful area and a tooth base area; wherein
   1.2 viewed in the normal section, the tooth base area extends from a base circle to a useful circle;
   1.3 the tooth flanks of teeth which are adjacent in the normal section are each implemented symmetrical to one another, wherein
   1.4 the axis of symmetry (y) intersects the base circle in the base point;
   **characterised in that**, each viewed in the normal section,
   1.5 the tooth flanks are implemented as a tangent function in the tooth base area as of a relevant diameter ($d_r$) in the direction of the gear wheel centre;
   1.6 the tangent function transitions in the tooth flank shape of the useful area in the relevant diameter ($d_r$) with a constant tangent;
   1.7 the tangent function transitions in a circular path with a constant tangent in the tooth base area, which is tangent to the base circle ($d_f$) in the root point ($F_P$).

2. The toothing according to claim 1, **characterised in that**

   2.1 the tangent function which is lengthened beyond the circular path intersects the axis of symmetry (y) in a helix angle of 90°-γ; wherein
   2.2 γ is selected smaller than 65°.

3. The toothing according to claim 1, **characterised in that**

   3.1 the tangent function which is lengthened beyond the circular path intersects the axis of symmetry (y) in a helix angle of 90°-γ; wherein
   3.2 γ is selected smaller than 50°.

4. The toothing according to claim 1, **characterised in that**

   4.1 the tangent function which is lengthened beyond the circular path intersects the axis of symmetry (y) in a helix angle of 90°- y; wherein
   4.2 γ is selected smaller than 45°.

5. The toothing according to one of the claims 2 to 4, **characterised in that** γ is selected according to the number of teeth (z) and to the pressure angle ($\alpha_r$) of the tooth flank shape on the relevant diameter ($d_r$) using the relation 45° - 180°/z - ($\alpha_r$).

6. The toothing according to claim 5, **characterised in that** the pressure angle ($\alpha_r$) of the tooth flank shape on the relevant diameter ($d_r$) is selected greater than or equal to 4°, in particular greater than 7°.

7. The toothing according to one of the claims 1 to 6, **characterised in that** the radius of the circular path is selected as 0.1 - 0.6 times the module.

8. The toothing according to one of the claims 1 to 6, **characterised in that** the radius of the circular path is selected as 0.3 - 0.4 times the module.

9. The toothing according to one of the claims 1 to 6, **characterised in that** the radius of the circular path is selected as 0.1 - 0.6 times the tooth gap width ($S_L$) on the relevant diameter ($d_r$).

10. The toothing according to one of the claims 1 to 6, **characterised in that** the radius of the circular path is selected as 0.3 - 0.4 times the tooth gap width ($S_L$) on the relevant diameter ($d_r$).

11. The toothing according to any of the preceding claims, **characterised in that** the relevant diameter ($d_r$) is smaller than or maximum equal to the diameter of the useful circle.

12. The toothing according to any of the preceding claims, **characterised in that** the relevant diameter ($d_r$) is selected

as an arithmetic average between the diameter of the useful circle and the diameter of a free circle.

13. The toothing according to any of the preceding claims, **characterised in that** the tooth flank shape is designed as an involute in the useful region.

14. The toothing according to claim 13, **characterised in that** the relevant diameter ($d_r$) is selected is greater than or minimum equal to the diameter of the base circle.

**Revendications**

1. Denture d'un pignon avec une pluralité de dents;

   1.1 dont les flancs de dents présentent une zone utile et une zone de pied de dent; dans laquelle
   1.2 vue en coupe normale, la zone de pied de dent s'étend d'un cercle de pied à un cercle utile;
   1.3 les flancs de dents voisines en coupe normale sont toutes symétriques les unes aux autres, dans laquelle
   1.4 l'axe de symétrie (y) coupe le cercle de pied dans le point de pied;
   **caractérisée en ce que**, toujours en coupe normale,
   1.5 les flancs de dents sont constituées comme une fonction tangentielle dans le zone de pied de dent à partir d'un diamètre ($d_r$) donné dans le sens du centre du pignon;
   1.6 la fonction tangentielle se transforme en forme de flancs de dents de la zone utile avec la même tangente dans le diamètre donné ($d_r$);
   1.7 la fonction tangentielle se transforme en trajet circulaire avec la même tangente dans la zone de pied de dent, qui est tangente au cercle de pied ($d_f$) dans le point de pied ($F_p$).

2. Denture selon la revendication 1, **caractérisée en ce que**

   2.1 la fonction tangentielle prolongée au-delà du trajet circulaire coupe l'axe de symétrie (y) avec un angle de pente de 90˚ -γ; dans laquelle
   2.2 l'on choisit γ plus petit que 65˚.

3. Denture selon la revendication 1, **caractérisée en ce que**

   3.1 la fonction tangentielle prolongée au-delà du trajet circulaire coupe l'axe de symétrie (y) avec un angle de pente de 90˚ -γ; dans laquelle
   3.2 l'on choisit γ plus petit que 50˚.

4. Denture selon la revendication 1, **caractérisée en ce que**

   4.1 la fonction tangentielle prolongée au-delà du trajet circulaire coupe l'axe de symétrie (y) avec un angle de pente de 90˚ -γ; dans laquelle
   4.2 l'on choisit γ plus petit que 45˚.

5. Denture selon l'une quelconque des revendications 2 à 4, **caractérisée en ce que** l'on choisit · en fonction du nombre de dents (z) et de l'angle de pression ($\alpha_r$) de la forme de flancs de dents sur le diamètre donné ($d_r$) selon la relation 45˚ - 180˚/z - ( $\alpha_r$).

6. Denture selon la revendication 5, **caractérisée en ce que** l'on choisit l'angle de pression ($\alpha_r$) de la forme de flancs de dents sur le diamètre donné ($d_r$) supérieur ou égal à 4˚, en particulier supérieur à 7˚.

7. Denture selon l'une quelconque des revendications 1 à 6, **caractérisée en ce que** l'on choisit le rayon du trajet circulaire avec un module de facteur 0,1 - 0,6.

8. Denture selon l'une quelconque des revendications 1 à 6, **caractérisée en ce que** l'on choisit le rayon du trajet circulaire avec un module de facteur 0,3 - 0,4.

9. Denture selon l'une quelconque des revendications 1 à 6, **caractérisée en ce que** l'on choisit le rayon du trajet circulaire avec une largeur d'espace entre les dents de facteur 0,1 - 0,6 ($S_L$) sur le diamètre donné ($d_r$).

**EP 2 181 277 B1**

**10.** Denture selon l'une quelconque des revendications 1 à 6, **caractérisée en ce que** l'on choisit le rayon du trajet circulaire avec une largeur d'espace entre les dents de facteur 0,3 - 0,4 ($S_L$) sur le diamètre donné ($d_r$).

**11.** Denture selon l'une quelconque des revendications précédentes, **caractérisée en ce que** le diamètre donné ($d_r$) est inférieur ou au maximum égal au diamètre du cercle utile.

**12.** Denture selon l'une quelconque des revendications précédentes, **caractérisée en ce que** l'on choisit le diamètre donné ($d_r$) comme moyenne arithmétique entre le diamètre du cercle utile et le diamètre d'un cercle libre.

**13.** Denture selon l'une quelconque des revendications précédentes, **caractérisée en ce que** la forme de flancs de dents est constituée d'involutes dans la zone utile.

**14.** Denture selon la revendication 13, **caractérisée en ce que** le diamètre donné ($d_r$) est supérieur ou au minimum égal au diamètre du cercle utile.

**13**

Fig. 1

Fig. 2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006015521
- DE 102006015521 B3